(19) Europäisches Patentamt
European Patent Office
Office européen des brevets

(11) **EP 1 668 857 B1**

## (12) EUROPÄISCHE PATENTSCHRIFT

(45) Veröffentlichungstag und Bekanntmachung des Hinweises auf die Patenterteilung:
**11.03.2009 Patentblatt 2009/11**

(51) Int Cl.:
*H04L 27/26* (2006.01)      *H04L 1/00* (2006.01)

(21) Anmeldenummer: **04787260.1**

(22) Anmeldetag: **30.09.2004**

(86) Internationale Anmeldenummer:
**PCT/EP2004/052375**

(87) Internationale Veröffentlichungsnummer:
**WO 2005/034459 (14.04.2005 Gazette 2005/15)**

(54) **VERFAHREN ZUM EINSTELLEN DER ÜBERTRAGUNGSPARAMETER VON IN EINER GRUPPE ZUSAMMENGEFASSTEN, BREITBANDIGEN ÜBERTRAGUNGSKANÄLEN**

METHOD FOR REGULATING THE TRANSMISSION PARAMETERS OF BROADBAND TRANSMISSION CHANNELS ASSEMBLED TO FORM A GROUP

PROCEDE POUR REGLER LES PARAMETRES DE TRANSMISSION DE CANAUX DE TRANSMISSION A LARGE BANDE REUNIS EN UN GROUPE

(84) Benannte Vertragsstaaten:
**DE ES FR GB IT**

(30) Priorität: **30.09.2003 DE 10345541**

(43) Veröffentlichungstag der Anmeldung:
**14.06.2006 Patentblatt 2006/24**

(73) Patentinhaber: **Nokia Siemens Networks GmbH & Co. KG**
**81541 München (DE)**

(72) Erfinder:
• **KOZEK, Werner**
**A-1220 Wien (AT)**
• **LABADI, Fauaz**
**A-1100 Wien (AT)**

(56) Entgegenhaltungen:
**EP-A- 1 037 426         WO-A-00/51303**
**WO-A-02/100008       US-A1- 2002 041 566**
**US-B1- 6 317 495**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Einstellen der Übertragungsparameter von in einer Gruppe zusammengefassten Übertragungskanälen, bei dem für jeden Übertragungskanal in Abhängigkeit von den ermittelten Übertragungseigenschaften des jeweiligen Übertragungskanals und eines zugeordneten Dienstes Übertragungsparameter eingestellt werden, wobei den Übertragungskanälen jeweils einer von zumindest zwei, unterschiedliche Wertigkeiten aufweisenden Diensten zugeordnet wird, und bei dem die Übertragungskanäle der Gruppe sich durch spektrale Interferenz beeinflussen können.

Bei den modernen Breitbandzugriffsverfahren für Teilnehmeranschlussgeräte der Teilnehmeranschlussleitung des klassischen Telefonsystems (xDSL-Dienste), über das Koaxialkabel (CATV) über Breitband-Funkdienste (WLAN, UMTS) oder Satellitenkommunikation angeschlossen, liegt stets eine Sternstruktur vor. Aufgrund der damit verbundenen Bündelung von Teilnehmeranschlussleitungen bzw. Gruppen von Übertragungskanälen mit einer Pluralität von Teilnehmern beeinflussen sich diese durch spektrale Interferenz nachteilig, insbesondere im Umfeld eines intelligenten Netzknotens, der die Teilnehmeranschlussgeräte mit dem Backbone des Internet verbindet.

Wegen der zunehmenden wirtschaftlichen Bedeutung der Breitbandzugriffsverfahren wurden zahlreiche Verfahren zur Verbesserung der erzielbaren Übertragungsgeschwindigkeit bzw. Datenrate aller Teilnehmer vorgeschlagen.

Die Verfahren lassen sich wie folgt einteilen:

A) Algorithmen zur Multiuser- Detektion: Die Detektion der Bitfolgen der einander beeinflussenden Nachrichtenübertragungen erfolgt gemeinsam unter gleichzeitiger Ermittlung der Nebensprechbeziehungen siehe "Multiuser Detection, S.Verdu, Cambridge University Press, London, New York, 1998". Algorithmen dieser Art sind im Standardisierungsprozess von UMTS angedacht. Diese Algorithmen setzen eine strenge Taktsynchronität der Nachrichtenübertragungen aller beteiligten Teilnehmer voraus. Diese Taktsynchronität ist bei xDSL-Datenübertragungen grundsätzlich nicht gegeben und auch ohne wesentliche Veränderungen der standardisierten Verfahren und damit des verwendeten Hardware-Equipment beim Teilnehmer und im Amt technisch nicht realisierbar.

B) MIMO- Signalverarbeitungsverfahren: Unter MIMO- Systemen versteht man die mathematische Theorie zur Behandlung von Systemen mit vektorwertigen Ein- und Ausgängen. MIMO- Signalverarbeitungsverfahren sind geeignet die Summenbitrate von einer Pluralität sich spektral beeinflussender digitaler Nachrichtenübertragungen zu verbessern, jedoch ist strenge Taktsynchronität und Rahmensynchronität aller Nachrichtenübertragungen vorausgesetzt. Aus den bei 1.) genannten Gründen ist daher der Einsatz von MIMO- Signalverarbeitungsalgorithmen wie "MIMO systems in the subscriber-line network, G. Tauböck, W. Henkel in 5th International OFDM Workshop 2000, Hamburg" derzeit praktisch nicht realisierbar.

C) Vektor-Modulationsverfahren: Eng verwandt mit 2.) sind die sogenannten Vektor-Modulationsverfahren, beschrieben in "Vectored Transmission for Digital Subscriber Line Systems", G.Ginis and J.Cioffi, erschienen in IEEE Journal Selected Areas of Communications Vol. 20, Issue 5, pp. 1085-1104, June 2002. Wesentlicher Unterschied ist die a posteriori Adaption des Modulationssignals der einzelnen Nachrichtenübertragungssysteme an die Nebensprechübertra-gungsfunktionen. Ebenso wie 2.) ist strenge Rahmensynchronität und damit Taktsynchronisation aller beteiligten Modems Vorraussetzung für den Einsatz von Vektormodulationsverfahren.

D)Spektrum-Managementverfahren: Wie in "Dynamic Spectrum Management for Next- Generation DSL Systems, K.-B. Song, S.-T. Chung, G. Ginis, J.M. Cioffi beschrieben, kann durch die geeignete Verteilung der spektralen Leistungsdichte der einzelnen Teilnehmer eine Maximierung der Summenbitrate aller Teilnehmer eines Kabelbündels erzielt werden.

Allen vorhergehend beschriebenen Verfahren ist gemeinsam, dass die Nebensprechbeziehungen zum Zeitpunkt der Aktivierung der jeweiligen Teilnehmeranschlussleitungen bzw. Übertragungskanale auf den Teilnehmeranschlussleitungen bereits ermittelt sind.

Weitere Dokumente, die sich mit der gegenseitigen Beeinflussung von Datenkanälen in einem Kommunikationssystem beschäftigen, sind im Folgenden kurz erwähnt.

Die internationale Patentanmeldung WO 02/1000008 beschreibt ein Verfahren zum Einstellen von Übertragungsparametern von in einer Gruppe zusammengefassten Übertragungskanälen, wodurch die Übertragungseigenschaften verbessert werden können.

In der europäischen Patentanmeldung EP 1037426 wird ein Verfahren zum variablen Zuweisen von zu übertragenden Bits auf bestimmte Übertragungssymbole in einem Multiträgersystem offenbart.

Ein weiteres beispielhaftes Verfahren zur Verbesserung der Performanz in einem Multiträgersystem ist ferner in der internationalen Patentanmeldung WO 00/51303 beschrieben. Gemäß diesem Verfahren werden zur Übertragung bestimmte Unterträgerkanäle ermittelt, welche derart genutzt werden, dass die spektrale Interferenz verringert werden kann.

In der US-amerikanischen Patentanmeldung 2002/0041566 schließlich wird ein Verfahren angegeben, mit dem Kommunikationsverbindungen in einem Kommunikationsnetz dynamisch angepasst werden. Dabei werden mobilen Nutzern bestimmte Service Level zugeteilt, abhängig von aktuellen gegenseitigen Beeinflussungen der einzelnen Teilnehmer.

Die der Erfindung zugrundeliegende Aufgabe besteht darin, die bekannten Verfahren hinsichtlich der Belange der Betreiber der Teilnehmeranschlüsse weiter zu verbessern. Die Aufgabe wird ausgehend von dem Verfahren zum Einstellen der Übertragungsparameter von in einer Gruppe zusammengefassten Übertragungskanälen gemäß den Merkmalen des Oberbegriffs des Patentanspruchs 1 durch dessen kennzeichnende Merkmale gelöst.

Bei dem erfindungsgemäßen Verfahren, bei dem die Übertragungskanäle einer Gruppe sich durch spektrale Interferenz gegenseitig beeinflussen können, werden für jeden Übertragungskanal in Abhängigkeit von den ermittelten Übertragungseigenschaften des jeweiligen Übertragungskanals und eines zugeordneten Dienstes Übertragungsparameter eingestellt. Den Übertragungskanälen wird jeweils einer von zumindest zwei, unterschiedliche Wertigkeiten aufweisenden Diensten zugeordnet. Ferner werden durch kontinuierliches Ermitteln der spektralen Interferenz in den Übertragungskanälen und der Zustandsänderungen der Übertragungskanäle die Beeinflussungsbeziehungen unter den Übertragungskanälen identifiziert und die Übertragungsparameter der Übertragungskanäle in Abhängigkeit von den identifizierten Beeinflussungsbeziehungen und der Wertigkeit ihrer jeweiligen Dienste optimiert. Der wesentliche Aspekt der Erfindung ist, dass bei der Optimierung der Übertragungsparameter für jeden Übertragungskanal die Beeinflussungsbeziehungen aller anderen Übertragungskanäle mit deren Wertigkeit gewichtet werden.

Ein wesentlicher Vorteil des erfindungsgemäßen Verfahrens ist darin zu sehen, dass die Kanalparameter nicht auf eine maximale Summe der Übertragungsgeschwindigkeiten bzw. Bitraten einer Gruppe von Übertragungskanälen bzw. eines Bündels von Leitungen sondern auf die möglichste Beibehaltung der Übertragungsgeschwindigkeit der Übertragungskanäle mit Diensten hoher Wertigkeit abgestimmt werden. Hohe Wertigkeiten weisen beispielsweise Übertragungskanäle einer Gruppe von Übertragungskanälen auf, die für einen Betreiber wirtschaftlich besonders attraktiv, d. h. ertragreich sind. Hierbei sind häufig Übertragungsgeschwindigkeiten auch bei starken Interferenzen innerhalb einer Gruppe von Übertragungskanälen bzw. eines Bündels von Leitungen zu garantieren. Bei bidirektionalen Übertragungsverfahren werden die beiden Übertragungsrichtungen vorteilhaft als getrennte unidirektionale abstrakte Übertragungskanäle behandelt, damit auch das Selbst- Übersprechen zwischen den unterschiedlich Übertragungsrichtungen erfasst und mathematisch entsprechend behandelt wird.

Nach einer vorteilhaften Ausgestaltung der Erfindung werden in Abhängigkeit von den Beeinflussungsbeziehungen Untergruppen von Übertragungskanälen klassifiziert, wobei die Beeinflussungsbeziehungen, welche Übertragungskanäle welche anderen Übertragungskanäle spektral beeinflussen, identifiziert und die Übertragungskanäle durch ein algebraisches Verfahren basierend auf binärwertigen Zustandsvektoren in Untergruppen klassifiziert werden. Diese Maßnahme dient vor allem dazu den zeitlichen Aufwand - d. h. den Berechnungsaufwand - bei der Realisierung des erfindungsgemäßen Verfahrens, insbesondere des verwendeten Optimierungsverfahrens zu reduzieren.

Nach einer weiteren vorteilhaften Ausgestaltung der Erfindung sind die Zustandsänderungen bei nach dem Asynchron Transfer Modus wirkenden Übertragungskanälen durch das Feststellen von Idle- Zellen in einer vorgegebenen Zeitspanne oder einer vorgegebenen Anzahl repräsentiert. Nach Zustandsänderungen in breitbandigen Übertragungskanälen wird eine die Übertragungsparameter ermittelnde Initialisierungsprozedur in den den Übertragungskanälen zugeordneten breitbandigen Übertragungseinrichtungen eingeleitet und aus den Übertragungsparametern die spektrale Beeinflussung ermittelt. Diese Ausgestaltung der Erfindung kann besonders wirtschaftlich realisiert werden, da vorhandene Komponenten für die Übertragung von Zellen im Asynchron Transfer Modus - beispielsweise integrierte Schaltkreise oder breitbandige xdls- Modems - integriert werden können.

Vorteilhaft werden im Rahmen der Initialisierungsprozedur die optimierten Übertragungsparameter in den Übertragungseinrichtungen für die jeweiligen Übertragungskanäle eingestellt werden. Hierbei können ebenfalls vorhandene Funktionen in den Übertragungseinrichtungen - beispielsweise breitbandige xdsl-Modem - mitbenutzt werden, wodurch eine wirtschaftliche Lösung erreicht wird.

Im folgenden wird anhand zweier Zeichnungen das erfindungsgemäße Verfahren bzw. Kommunikationseinrichtung erläutert.

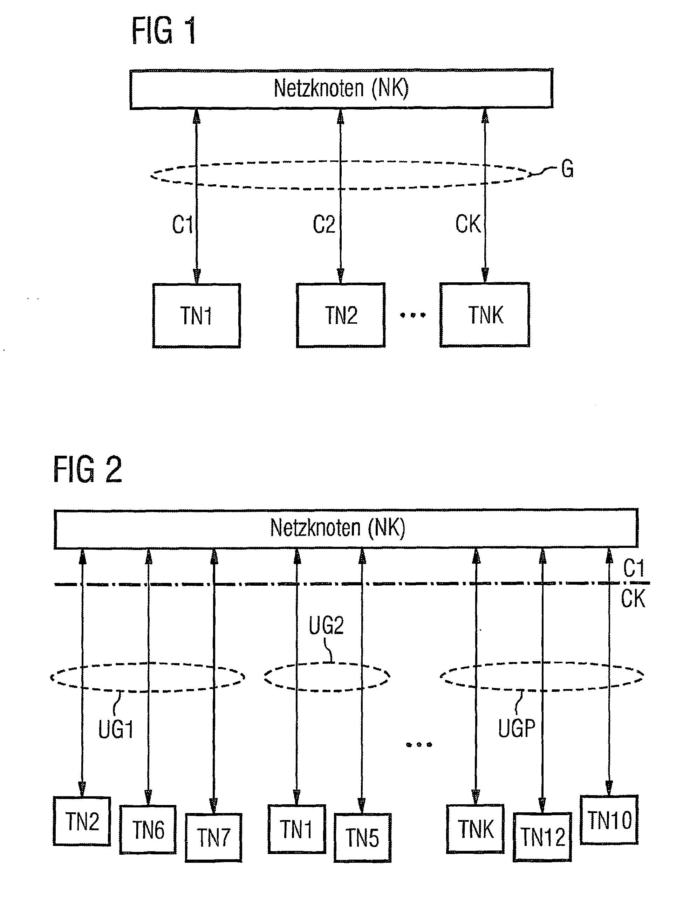

Für das Ausführungsbeispiel sei angenommen - siehe Figur 1, dass an einen Netzknoten NK mehrere Teilnehmer TN1..TK jeweils über einen Übertragungskanal C1..CK angeschlossen sind, wobei die Übertragungskanäle C1..CK durch Breitbandteilnehmer-Übertra-gungskanäle repräsentiert sind. Die an den Netzknoten NK angeschlossenen Teilnehmer TN1..TNK bzw. die Übertragungskanäle C1..CK repräsentieren erfindungsgemäß eine Gruppe von Übertragungskanälen. Die Breitbandteilnehmer-Übertragungskanäle sind beispielsweise durch xDSL- Übertragungskanäle realisiert, wobei als Übertragungsverfahren vorteilhaft das OFDM-Übertragungsverfahren oder das DMT- Übertragungsverfahren eingesetzt wird. Der Netzknoten NK kann beispielsweise durch einen DSLAM (Digital Subscriber Line Access Multiplexer realisiert sein bzw. durch einen DSLAM- übergreifende Hostrechner, der mehrere DSLAM steuert.

Bei einer großen Anzahl von Teilnehmern TN1..TNK wie es etwa bei Breitbandteilnehmeranschlüssen über das klassische Telefonnetz der Fall ist, erweist sich eine Klassifikation in Gruppen bzw. Bündeln von Teilnehmern gegenseitiger Beeinflussung als vorteilhaft. Die Bündel- bzw. Gruppenzugehörigkeit lässt sich mathematisch formal über eine binärwertige Matrix $G(k,l)$ beschreiben (hierbei durchlaufen beide Indizes die Anzahl aller Teilnehmer) derart dass man $G(k,l)=1$ setzt, wenn der Teilnehmer \$k\$ den Teilnehmer \$1\$ wesentlich beeinflusst (und vice versa) bzw. dass $G(k,l)=0$ gesetzt wird, wenn keine wesentliche Beeinflussung zwischen Teilnehmer k bzw. Teilnehmer 1 vorliegt.

Im folgenden wird beispielhaft erklärt wie durch laufende Beobachtung bzw. Ermittlung von Zustandsänderungen der Übertragungsstrecken bzw. auftretender Störungen ein konsistenter Schätzwert der Bündelgruppenmatrix $G(k,l)$ ermittelt wird. Im folgenden sei n ein Zeitindex eines Zeitintervalls aller laufenden Beobachtungen von Statusänderungen an einer Kommunikationseinrichtung - beispielsweise ein Netzknoten DSLAM . Weiters sei $t_n(k)$ ein binärwertiger Ursachen-Vektor der Ein- und Ausschaltvorgänge wie folgt beschrieben: $t_n(k)$ = 1 wenn der k-te Teilnehmer im Beobachtungsintervall angeschaltet bzw. abgeschaltet wurde und $t_n(k)=0$ wenn der k-te Teilnehmer seinen Betriebzustand im Beobachtungsintervall nicht geändert hat. Analog sei ein binärwertiger Wirkungs-Vektor $r_n(k)$ wie folgt definiert: $r_n(k)=1$ wenn die k-te Übertragung wesentlich gestört wird (d. h. Störung liegt über einem zu definierenden Schwellwert) bzw. $r_n(k)=0$ wenn die k-te Übertragung keine wesentlichen Störungen erfährt. Im folgenden seien alle Operationen im endlichen Körper GF(2) gegeben. Definiert man die binärwertigen Hilfsmatrizen X(k,l) bzw. Y(k,l) durch die beiden Iterationsvorschriften:

$$X_{n+1}(k,l) = X_n(k,l)(t(l)t(k)+t^{-1}(k)) \, ,$$

$$Y_{n+1}(k,l) = Y_n(k,l)(r(l)t(k)+t^{-1}(k)) \, ,$$

Es ergibt sich folgende Iteration für die Bündelgruppenmatrix:

$$G_{n+1} = G_n + Y_n X_n^{-1} + G_n \circ Y_n X_n^{-1} \, ,$$ wobei ∘ für das Hadamard- Produkt von Matrizen steht. Startwert für die Iterationen ist $G_0(k,l)=0$, $X_0(k,l)=1$ und $Y_0(k,l)=1$.

Bei der Identifikation der Nebensprechübertragungsfunktion innerhalb einer Bündelgruppe kann nicht auf existierende Verfahren aufgebaut werden, da wie bereits erwähnt alle in der Literatur beschriebenen Konzepte auf Rahmensynchronität basieren.

Im folgenden sei daher ein neuartiges Konzept zur nichtkohärenten Identifikation eines MIMO- Systems beschrieben. Die Beschreibung aller involvierten physikalischen Parameter erfolgt ausschließlich im Frequenzbereich, wobei die Frequenzachse in hinreichende kleine Intervalle unterteilt ist. Bei Multiträgermodulationssystemen wie OFDM oder DMT genügt durch den Standard definierte Aufteilung der Frequenzachse, bei Einträgersystemen können die Spektraldarstellungen durch diskrete Fouriertransformation, vorteilhaft mittels Fast-Fourier-Transformation Algorithmen, problemlos errechnet werden.

Vorteilhaft ist eine möglichst feine Auflösung der Frequenzachse, jedoch muss auch der steigende Rechenaufwand berücksichtigt werden, d.h. eine typische Länge von M=128 erweist sich als ausreichend. Sei nun $n$ der bereits weiter oben definierte Index des Beobachtungszeitintervalls im Netzknoten bzw. im DSLAM, $1$ der Teilnehmerindex innerhalb der Bündelgruppe und $m$ der Frequenzindex (0<m<M), so lässt sich mit diesen Indizes eine Hilfsmatrix ("Leistungsanregungsmatrix") vorteilhaft über die zeitlichen Änderungen im Sende- Leistungsdichtespektrum des l-ten Teilnehmers $S_l(n,m)$ abhängig vom Zeitindex definieren:

$$X_n(l,m) = S_l(n+1,m) - S_l(n,m)$$

Analog zur Leistungsanregungsmatrix sei eine inkrementelle Störleistungsmatrix $Y_n(l,m)$ durch die entsprechende zeitliche Änderung der spektral diskretisierten Störleistungsdichte $N_l(n,m)$ definiert:

$$Y_n(l,m) = N_l(n+1,m) - N_l(n,m)$$

Dann ergibt sich eine die Störwechselwirkung zwischen k-tem und 1-tem Teilnehmer charakterisierende Übertragungsmatrix $H_n(k,l)$ durch Matrixmultiplikation von $Y_n$ und $X_n^{-1}$, der Pseudoinversen von $X_n$:

$$H_n(k,l) = \sum_{p=0}^{M} Y_n(k,p) X_n^{-1}(p,l)$$

Die Übertragungsmatrix $H_n(k,l)$ ist also ein Maß für die wechselseitige Störbeeinflussung zwischen Teilnehmer k und Teilnehmer 1 im Frequenzbereich mit dem Index n. Für die Optimierung des Betreibernutzen gilt es nun besonders solche Teilnehmer mit einer hohen Tarifklasse vor Nebensprechstörungen zu schützen. Um diesem Umstand Rechnung zu tragen sei daher eine gewichtete Summenübertragungsfunktion $H_{agg,k}(n)$ des k-ten Teilnehmers derart definiert, dass die Störeinträge bezüglich aller anderen Teilnehmer mit deren Wertigkeit $p_l$ gewichtet werden:

$$H_{agg,k}(n) = \sum_{l=0}^{M} p_l H_n(k,l) \; .$$

Die so definierte Summenübertragungsfunktion $H_{agg,k}(n)$ stellt nun eine für den Betreiber des Netzknotens relevante Straf-Funktion bei der Implementierung von Optimierungs-Algorithmen zur Raten- bzw. Leistungszuweisungen wie sie in der Literatur beschrieben sind siehe z. B. D. Luenberger Optimization by Vector Space Methods, John Wiley & Sons, 1969. Eine vereinfachte iterative Vorgangsweise bei der Aufschaltung eines neuen Teilnehmers wäre durch die sukzessive Steigerung der Bitrate während einer Testphase denkbar, wo durch Minimierung von $H_{agg,k}(n)$ sichergestellt wird, dass die Erhöhung der Bitrate nicht auf Kosten bereits existierender, höherwertiger Dienste erfolgt.

Bei DMT-basierenden Übertragungsverfahren bedeutet dies, dass die sogenannten Bit- Loading Algorithmen zur Verteilung der Bits über den Trägerindex um die Nebenbedingung einer Minimierung von $H_{agg,k}(n)$ erweitert werden sollen um den maximalen Betreibernutzen zu erzielen. Die bisher einzige Nebenbedingung dieser Art ist die Einhaltung der standardisierten Spektralmaske.

Figur 2 zeigt beispielhaft eine mögliche Klassifizierung von Untergruppen UG1..UGP nach der vorhergehend beschriebenen Ermittlungsmethode, wobei die Klassifizierung in Abhängigkeit von der ermittelten spektralen Interferenzen zwischen den Übertragungskanälen C1..CK und den Zustandsänderungen der Übertragungskanäle C1..CK ermittelt werden.

Das erfindungsgemäße Verfahren ist nicht nur OFDM- oder DMT-Übertragungsverfahren anwendbar, sondern kann in einer Vielzahl von drahtgebundenen und drahtlosen Kommunikationseinrichtungen in Kommunikationsnetzen eingesetzt werden, bei denen eine gegenseitige Beeinflussung der Übertragungskanäle stattfindet und deren Kanalparameter bzw. deren Übertragungsressourcen in Abhängigkeit von Diensten mit unterschiedlichen Wertigkeiten insbesondere für die Betreiber von Kommunikationsnetzen optimiert werden sollen - beispielsweise für Übertragungskanäle in einem Wireless LAN.

**Patentansprüche**

1. Verfahren zum Einstellen der Übertragungsparameter von in einer Gruppe (G) zusammengefassten Übertragungskanälen (C1..CK), bei dem die Übertragungskanäle (C1..CK) der Gruppe sich durch spektrale Interferenz gegenseitig beeinflussen können, wobei

   - für jeden Übertragungskanal (C1..CK) in Abhängigkeit von den ermittelten Übertragungseigenschaften des jeweiligen Übertragungskanals (C1..CK) und eines zugeordneten Dienstes Übertragungsparameter eingestellt werden, und den Übertragungskanälen (C1..CK) jeweils einer von zumindest zwei, unterschiedliche Wertigkeiten aufweisenden Diensten zugeordnet wird,
   - durch kontinuierliches Ermitteln der spektralen Interferenz in den Übertragungskanälen (C1..CK) und der Zustandsänderungen der Übertragungskanäle (C1..CK) die Beeinflussungsbeziehungen unter den Übertragungskanälen (C1..CK) identifiziert werden, und
   - die Übertragungsparameter der Übertragungskanäle (C1..CK) in Abhängigkeit von den identifizierten Beeinflussungsbeziehungen und der Wertigkeit ihrer jeweiligen Dienste optimiert werden,

   **dadurch gekennzeichnet,**
   **dass** bei der Optimierung der Übertragungsparameter für jeden Übertragungskanal (C1..CK) die Beeinflussungsbeziehungen aller anderen Übertragungskanäle mit deren Wertigkeit gewichtet werden.

2. Verfahren nach Anspruch 1,
   **dadurch gekennzeichnet,**
   **dass** in Abhängigkeit von den Beeinflussungsbeziehungen Untergruppen (UG1..UGP) von Übertragungskanälen (C1..CK) klassifiziert werden.

3. Verfahren nach Anspruch 1 oder 2,
   **dadurch gekennzeichnet,**
   **dass** die Beeinflussungsbeziehungen, welche Übertragungskanäle (C1..CK) welche anderen Übertragungskanäle (C1..CK) spektral beeinflussen, identifiziert und die Übertragungskanäle (C1..CK) durch ein algebraisches Verfahren basierend auf binärwertigen Zustandsvektoren in Untergruppen klassifiziert werden.

4. Verfahren nach einem der Ansprüche 1 bis 3,
   **dadurch gekennzeichnet,**
   **dass** die Übertragungsparameter der Übertragungskanäle (C1..CK) in Abhängigkeit von den identifizierten Beeinflussungsbeziehungen und der Wertigkeit ihrer jeweiligen Dienste kontinuierlich, in regelmäßigen oder vorgebbaren Zeitabständen oder bei Zustandsänderungen optimiert werden.

5. Verfahren nach einem der vorhergehenden Ansprüche,
   **dadurch gekennzeichnet,**

**dass** die Wertigkeit der Dienste von den mit den jeweiligen Diensten zu erzielenden Gebühren oder von einer garantierten Übertragungsgüte oder garantierten Übertragungskapazität oder einer garantierten Übertragungsgeschwindigkeit abhängt.

6. Verfahren nach einem der vorhergehenden Ansprüche,
**dadurch gekennzeichnet,**
**dass** die spektrale Beeinflussung durch kontinuierliches Messen des Rausch-/Nutzsignalverhältnisses in den Übertragungskanälen (C1..CK) ermittelt wird.

7. Verfahren nach einem der vorhergehenden Ansprüche,
**dadurch gekennzeichnet,**
**dass** die Zustandsänderungen der Übertragungskanäle (C1..CK) durch einen Wechsel von einem Aktiv- in einen Inaktivzustand oder von einem Inaktiv- in einen Aktivzustand oder von einem Aktiv- in einen Fehlerzustand oder von einem Inaktiv- in einen Fehlerzustand oder von einem Fehler- in Aktivzustand oder von einem Fehlerzustand in einen Inaktivzustand repräsentiert sind.

8. Verfahren nach einem der Ansprüche 1 bis 7,
**dadurch gekennzeichnet,**
**dass** die Zustandsänderung bei nach dem Asynchron Transfer Modus wirkenden Übertragungskanälen (C1..CK) durch das Feststellen von Idle-Zellen in einer vorgegebenen Zeitspanne oder einer vorgegebenen Anzahl repräsentiert ist.

9. Verfahren nach Anspruch 8,
**dadurch gekennzeichnet,**
**dass** nach Zustandsänderungen in breitbandigen Übertragungskanälen (C1..CK) eine die Übertragungsparameter ermittelnde Initialisierungsprozedur in den den Übertragungskanälen (C1..CK1) zugeordneten breitbandigen Übertragungseinrichtungen eingeleitet und aus den Übertragungsparametern die spektrale Beeinflussung ermittelt wird.

10. Verfahren nach Anspruch 8 oder 9,
**dadurch gekennzeichnet,**
**dass** im Rahmen der Initialisierungsprozedur die optimierten Übertragungsparameter in den Übertragungseinrichtungen für die jeweiligen Übertragungskanäle (C1..CK) eingestellt werden.

11. Verfahren nach einem der vorhergehenden Ansprüche,
**dadurch gekennzeichnet,**
**dass** ein unidirektionaler Übertragungskanal als ein Übertragungskanal (C1..CK) und ein bidirektionaler Übertragungskanal als zwei Übertragungskanäle betrachtet werden.

12. Verfahren nach einem der vorhergehenden Anspruch,
**dadurch gekennzeichnet,**
**dass** in den Übertragungskanälen (C1..CK), über die keine übertragungsverfahrenspezifischen Signale übertragen werden, die spektrale Interferenzen gemessen und diese in die Optimierung der Übertragungsparameter einbezogen werden.

13. Verfahren nach einem der vorhergehenden Ansprüche,
**dadurch gekennzeichnet,**
**dass** die Übertragungsparameter durch die Sendeleistungsverteilung im jeweiligen Übertragungskanal (C1..CK) repräsentiert sind.

14. Verfahren nach einem der vorhergehenden Ansprüche,
**dadurch gekennzeichnet,**
**dass** die Gruppe (G) oder Untergruppen (UG1..UGP) von Übertragungskanälen in einem Leitungsbündel oder einem Funkbereich oder an einem Knoten (NK) eines drahtgebundenen oder drahtlosen Kommunikationsnetzes realisiert sind.

15. Verfahren nach Anspruch 13,
**dadurch gekennzeichnet,**
**dass** die an einem Knoten (NK) physikalisch hierarchisch Netzstrukturierten Übertragungskanäle (C1..CK) auf eine logisch sternförmige Struktur abgebildet werden, wobei untergeordnete Knoten von dem zentralen Knoten (NK) gesteuert werden.

16. Verfahren nach einem der vorhergehenden Ansprüche,
**dadurch gekennzeichnet,**
**dass** die Übertragungsparameter der Übertragungskanäle (C1..CK) einer Gruppe oder Untergruppe von Übertragungskanälen in Abhängigkeit von den identifizierten Beeinflussungsbeziehungen und der Wertigkeit ihrer jeweiligen Dienste mit Hilfe eines mathematischen Optimierungsverfahrens optimiert werden.

17. Verfahren nach einem der vorhergehenden Ansprüche,
**dadurch gekennzeichnet,**
**dass** die Übertragungsmeter der Übertragungskanäle (C1..CK) jeweils auf ein OFDM- oder ein DMT-Übertragungsverfahren bezogen sind.

18. Kommunikationseinrichtung zum Einstellen der Übertragungsparameter für zu einer Gruppe (G) zusammengefassten Übertragungskanälen (C1..CK), wobei die Übertragungskanäle (C1..CK) der Gruppe (G) sich durch spektrale Interferenz gegenseitig beeinflussen können,

- mit an die Kommunikationseinrichtung (NK) angeschlossenen, jeweils die Übertragungskanäle (C1..CK) abschließenden Übertragungseinrichtungen zum Ermitteln der Übertragungseigenschaften des jeweiligen Übertragungskanals (C1..CK) und die Erfassung der Übertragungseigenschaften in der Kommunikationseinrichtung (NK),

-- mit Mitteln zum Einstellen der Übertragungsparameter in Abhängigkeit von den ermittelten Übertragungseigenschaften des jeweiligen Übertragungskanals (C1..CK) und eines zugeordneten Dienstes, wobei den Übertragungskanälen (C1..CK) jeweils einer von zumindest zwei, unterschiedliche Wertigkeiten aufweisenden Diensten zugeordnet wird,

- wobei die Kommunikationseinrichtung zum Erfassen der spektralen Beeinflussung in den Übertragungskanälen (C1..CK) und der Zustandsänderungen der Übertragungskanäle (C1..CK) und zum Identifizieren der Beeinflussungsbeziehungen unter den Übertragungskanälen (C1..CK) ausgestaltet ist, und

eine Optimierungsroutine zur Optimierung der Übertragungsparameter der Übertragungskanäle (C1..CK) in Abhängigkeit von den identifizierten Beeinflussungsbeziehungen und der Wertigkeit ihrer jeweiligen Dienste vorgesehen ist, **dadurch gekennzeichnet,** **dass** die Optimierungsroutine derart ausgestaltet ist, dass für jeden Übertragungskanal (C1..CK) die Beeinflussungsbeziehungen aller anderer Kanäle mit deren Wertigkeit gewichtet werden.

**Claims**

1. Method for adjusting the transmission parameters of transmission channels (C1..CK) assembled to from a group (G), in which the transmission channels (C1..CK) of the group can mutually influence each other by spectral interference, wherein

- transmission parameters are adjusted for each transmission channel (C1..CK) in dependence on the determined transmission characteristics of the respective transmission channel (C1..CK) and of an associated service, and in each case one of at least two services having different priorities is allocated to the transmission channels (C1..CK),
- the interference relationships among the transmission channels (C1..CK) are identified by continuously determining the spectral interference in the transmission channels (C1..CK) and the state changes of the transmission channels (C1..CK), and
- the transmission parameters of the transmission channels (C1..CK) are optimized in dependence on the identified interference relationships and the priority of their respective services,

**characterized**
**in that** during the optimization of the transmission parameters for each transmission channel (C1..CK), the interference relationships of all other transmission channels are weighted with their priority.

2. Method according to Claim 1, **characterized** **in that** sub-groups (UG1..UGP) of transmission channels (C1..CK) are classified in dependence on interference relationships.

3. Method according to Claim 1 or 2, **characterized in that** the interference relationships regarding which transmission channels (C1..CK) spectrally influence other transmission channels (C1..CK) are identified and the transmission channels (C1..CK) are classified into subgroups by an algebraic method based on binary-valued state vectors.

4. Method according to one of Claims 1 to 3, **characterized** **in that** the transmission parameters of the transmission channels (C1..CK) are optimized continuously, at regular or predeterminable time intervals or in the case of state changes in dependence on the identified interference relationships and the priority of their respective services.

5. Method according to one of the preceding claims, **characterized** **in that** the priority of the services depends on the charges to be achieved with the respective services or on a guaranteed transmission quality or guaranteed transmission capacity or a guaranteed transmission speed.

6. Method according to one of the preceding claims, **characterized** **in that** the spectral interference is determined by continuously measuring the noise/useful-signal ratio in the transmission channels (C1..CK).

7. Method according to one of the preceding claims, **characterized** **in that** the state changes of the transmission channels (C1..CK) are represented by a change from an active state into an inactive state or from an inactive state into an active state or from an active state into a fault state or from an inactive state into a fault state or from a fault state into an active state or from a fault state into an inactive state.

8. Method according to one of Claims 1 to 7, **characterized in that** the state change is represented by determining idle cells in a predetermined time interval or in a predetermined number in the case of transmission channels (C1..CK) acting in accordance with the asynchronous transfer mode.

9. Method according to Claim 8, **characterized in that** after state changes in broadband transmission channels (C1..CK), an initialization procedure determining the transmission parameters is initiated in the broadband transmission facilities allocated to the transmission channels (C1..CK1) and the spectral interference is determined from the transmission parameters.

10. Method according to Claim 8 or 9, **characterized in that** the optimized transmission parameters are adjusted for the respective transmission channels (C1..CK) in the transmission facilities as part of the initialization procedure.

11. Method according to one of the preceding claims, **characterized in that** a unidirectional transmission channel is considered as one transmission channel (C1..CK) and a bidirectional transmission channel is considered as two transmission channels.

12. Method according to one of the preceding claims, **characterized in that** the spectral interferences are measured in the transmission channels (C1..CK) via which no transmission-method-specific signals are transmitted, and these are included in the optimization of the transmission parameters.

13. Method according to one of the preceding claims, **characterized in that** the transmission parameters are represented by the transmitting power distribution in the respective transmission channel (C1..CK).

14. Method according to one of the preceding claims, **characterized in that** the group (G) or subgroups (UG1..UGP) of transmission channels are implemented in a trunk group or a radio range or node (NK) of a wire-connected or wireless communication network.

15. Method according to Claim 13, **characterized**

**in that** the transmission channels (C1..CK) physically hierarchically network-structured at a node (NK) are mapped onto a logical star-shaped structure, wherein subordinate nodes are controlled by the central node (NK).

16. Method according to one of the preceding claims, **characterized in that** the transmission parameters of the transmission channels (C1..CK) of a group or subgroup of transmission channels are optimized with the aid of a mathematical optimization method in dependence on the identified interference relationships and the priority of their respective services.

17. Method according to one of the preceding claims, **characterized in that** the transmission parameters of the transmission channels (C1..CK) are in each case related to an OFDM or a DMT transmission method.

18. Communication device for adjusting the transmission parameters for transmission channels (C1..CK) assembled to form a group (G), wherein the transmission channels (C1..CK) of the group (G) can influence each other by spectral interference,

- with transmission devices connected to the communication device (NK), in each case terminating the transmission channels (C1..CK), for determining the transmission characteristics of the respective transmission channel (C1..CK) and detecting the transmission characteristics in the communication device (NK),
- with means for adjusting the transmission parameters in dependence on the determined transmission characteristics of the respective transmission channel (C1..CK) and of an associated service, wherein in each case one of at least two services having different priorities is allocated to the transmission channels (C1..CK),
- wherein the communication device is designed for detecting the spectral interference in the transmission channels (C1..CK) and the state changes of the transmission channels (C1..CK) and for identifying the interference relationships among the transmission channels (C1..CK), and
- an optimization routine for optimizing the transmission parameters of the transmission channels (C1..CK) in dependence on the identified interference relationships and the priority of their respective services is provided,

**characterized in that** the optimization routine is designed in such a manner that for each transmission channel (C1..CK), the interference relationships of all other channels are weighted with their priority.

## Revendications

1.  Procédé pour le réglage des paramètres de transmission de canaux de transmission (C1..CK) réunis en un groupe (G), dans lequel les canaux de transmission (C1..CK) du groupe peuvent s'influencer réciproquement par interférence spectrale,

    - des paramètres de transmission étant réglés pour chaque canal de transmission (C1..CK) en fonction des propriétés de transmission déterminées du canal de transmission (C1..CK) respectif et d'un service attribué, et à chaque fois l'un d'au moins deux services présentant différentes valeurs significatives étant attribué aux canaux de transmission (C1..CK),
    - les rapports d'influence entre les canaux de transmission (C1..CK) étant identifiés par la détermination continue de l'interférence spectrale dans les canaux de transmission (C1..CK) et des changements d'état des canaux de transmission (C1..CK), et
    - les paramètres de transmission des canaux de transmission (C1..CK) étant optimisés en fonction des rapports d'influence identifiés et de la valeur significative de leurs services respectifs,

    **caractérisé en ce que,**
    lors de l'optimisation des paramètres de transmission pour chaque canal de transmission (C1..CK), les rapports d'influence de tous les autres canaux de transmission sont pondérés avec leur valeur significative.

2.  Procédé selon la revendication 1,
    **caractérisé en ce que** des sous-groupes (UG1..UGP) de canaux de transmission (C1..CK) sont classifiés en fonction des rapports d'influence.

3.  Procédé selon la revendication 1 ou 2,
    **caractérisé en ce que**
    les rapports d'influence, qui indiquent quels canaux de transmission (C1..CK) influencent quels autres canaux de transmission (C1..CK) au plan spectral, sont identifiés et les canaux de transmission (C1..CK) sont classés en sous-groupes par un procédé algébrique sur la base de vecteurs d'état de valeur binaire.

4.  Procédé selon l'une quelconque des revendications 1 à 3,
    **caractérisé en ce que**
    les paramètres de transmission des canaux de transmission (C1..CK) sont optimisés en fonction des rapports d'influence identifiés et la valeur significative de leurs services respectifs de façon continue, à des intervalles de temps réguliers ou prédéfinissables ou en cas de modifications d'état.

5.  Procédé selon l'une quelconque des revendications précédentes,
    **caractérisé en ce que**
    la valeur significative des services dépend des taxes à obtenir avec les services respectifs ou d'une qualité de transmission garantie ou d'une capacité de transmission garantie ou d'une vitesse de transmission garantie.

6.  Procédé selon l'une quelconque des revendications précédentes,
    **caractérisé en ce que** l'influence spectrale est déterminée par la mesure continue du rapport bruit/signal utile dans les canaux de transmission (C1..CK).

7.  Procédé selon l'une quelconque des revendications précédentes,
    **caractérisé en ce que** les changements d'état des canaux de transmission (C1..CK) sont représentés par un changement d'un état actif dans un état inactif ou d'un état inactif dans un état actif ou d'un état actif dans un état d'erreur ou d'un état inactif dans un état d'erreur ou d'un état d'erreur dans un état actif ou d'un état d'erreur dans un état inactif.

8.  Procédé selon l'une quelconque des revendications 1 à 7,
    **caractérisé en ce que**
    le changement d'état est représenté dans le cas de canaux de transmission (C1..CK) agissant selon le mode de transfert asynchrone par la détermination de cellules Idle dans un laps de temps prédéfini ou un nombre prédéfini.

9.  Procédé selon la revendication 8,
    **caractérisé en ce que,**
    après des changements d'état dans des canaux de transmission (C1..CK) à large bande, une procédure d'initialisation déterminant les paramètres de transmission est introduite dans les dispositifs de transmission à large bande attribués aux canaux de transmission (C1..CK) et l'influence spectrale est déterminée à partir des paramètres de transmission.

10. Procédé selon la revendication 8 ou 9,
    **caractérisé en ce que,**
    dans le cadre de la procédure d'initialisation, les paramètres de transmission optimisés sont réglés dans les dispositifs de transmission pour les canaux de transmission respectifs (C1..CK).

11. Procédé selon l'une quelconque des revendications précédentes,

**caractérisé en ce qu'**un canal de transmission unidirectionnel et un canal de transmission bidirectionnel sont considérés respectivement comme un canal de transmission (C1..CK) et comme deux canaux de transmission.

12. Procédé selon l'une quelconque des revendications précédentes,
**caractérisé en ce que** les interférences spectrales sont mesurées dans les canaux de transmission (C1..CK), par lesquels aucun signal spécifique au procédé de transmission n'est transmis, et elles sont intégrées dans l'optimisation des paramètres de transmission.

13. Procédé selon l'une quelconque des revendications précédentes,
**caractérisé en ce que** les paramètres de transmission sont représentés par la répartition de puissance d'émission dans le canal de transmission (C1..CK) respectif.

14. Procédé selon l'une quelconque des revendications précédentes,
**caractérisé en ce que** le groupe (G) ou des sous-groupes (UG1..UGP) de canaux de transmission sont réalisés dans un faisceau de lignes ou une zone radio ou sur un noeud (NK) d'un réseau de communication filaire ou non filaire.

15. Procédé selon la revendication 13,
**caractérisé en ce que** les canaux de transmission (C1..CK) présentant une structure hiérarchique physique au niveau du réseau sur un noeud (NK) sont représentés sur une structure logique en forme d'étoile, des noeuds subordonnées étant commandés par le noeud (NK) central.

16. Procédé selon l'une quelconque des revendications précédentes,
**caractérisé en ce que** les paramètres de transmission des canaux de transmission (C1..CK) d'un groupe ou sous-groupe de canaux de transmission sont optimisés en fonction des rapports d'influence identifiés et la valeur significative de leurs services respectifs à l'aide d'un procédé d'optimisation mathématique.

17. Procédé selon l'une quelconque des revendications précédentes,
**caractérisé en ce que** les paramètres de transmission des canaux de transmission (C1..CK) sont rapportés à chaque fois à un procédé de transmission OFDM ou un procédé de transmission DMT.

18. Dispositif de communication pour le réglage des paramètres de transmission pour des canaux de transmission (C1..CK) réunis en un groupe (G), les canaux de transmission (C1..CK) du groupe (G) pouvant s'influencer réciproquement par l'interférence spectrale,

- avec des dispositifs de transmission raccordés au dispositif de communication (NK) et terminant à chaque fois les canaux de transmission (C1..CK) pour la détermination des propriétés de transmission du canal de transmission (C1..CK) respectif et la prise en compte des propriétés de transmission dans le dispositif de communication (NK),

-- avec des moyens pour le réglage des paramètres de transmission en fonction des propriétés de transmission déterminées du canal de transmission (C1..CK) respectif et d'un service attribué, à chaque fois l'un d'au moins deux services présentant différentes positions de valeur significative étant attribué aux canaux de transmission (C1..CK),

- le dispositif de communication étant conçu pour la prise en compte de l'influence spectrale dans les canaux de transmission (C1..CK) et des changements d'état des canaux de transmission (C1..CK) et pour l'identification des rapports d'influence entre les canaux de transmission (C1..CK), et

une routine d'optimisation étant prévue pour l'optimisation des paramètres de transmission des canaux de transmission (C1..CK) en fonction des rapports d'influence identifiés et de la position de valeur de leurs services respectifs,
**caractérisé en ce que**
la routine d'optimisation est conçue de telle sorte que, pour chaque canal de transmission (C1..CK), les rapports d'influence de tous les autres canaux sont pondérés avec leur valeur significative.

## FIG 1

Netzknoten (NK)

G

C1    C2    CK

| TN1 | TN2 | ... | TNK |

## FIG 2

Netzknoten (NK)

C1
CK

UG2

UG1    UGP

...

| TN2 | TN6 | TN7 | TN1 | TN5 | TNK | TN12 | TN10 |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 021000008 A
- EP 1037426 A
- WO 0051303 A
- US 20020041566 A

**In der Beschreibung aufgeführte Nicht-Patentliteratur**

- **G.GINIS ; J.CIOFFI.** Vectored Transmission for Digital Subscriber Line Systems. *IEEE Journal Selected Areas of Communications,* Juni 2002, vol. 20 (5), 1085-1104
- **D. LUENBERGER.** Optimization by Vector Space Methods. John Wiley & Sons, 1969